# EUROPÄISCHE PATENTSCHRIFT

(11) **EP 3 721 124 B1**
(45) Veröffentlichungstag und Bekanntmachung des Hinweises auf die Patenterteilung: **09.03.2022**
(21) Anmeldenummer: 19701861.7
(22) Anmeldetag: 25.01.2019
(51) Int. Cl.: F16K 37/00, F16K 1/44, G01M 3/28

(54) **VENTILÜBERWACHUNGSSYSTEM FÜR EIN KOAXIALES DOPPELSICHERHEITSVENTIL**
VALVE MONITORING SYSTEM FOR A COAXIAL DUAL-SAFETY VALVE
SYSTÈME DE SURVEILLANCE DE SOUPAPES POUR UNE SOUPAPE DE SÛRETÉ DOUBLE COAXIALE

(30) Priorität: 08.02.2018 DE 102018102866
(43) Veröffentlichungstag der Anmeldung: 14.10.2020
(73) Patentinhaber: ebm-papst Landshut GmbH, 84030 Landshut (DE)
(72) Erfinder: VROLIJK, Enno, 7751DX Dalen (NL); STOLZ, Sebastian, 84030 Ergolding (DE)
(74) Vertreter: Staeger & Sperling Partnerschaftsgesellschaft mbB
(86) Internationale Anmeldenummer: PCT/EP2019/051911
(87) Internationale Veröffentlichungsnummer: WO 2019/154639

(56) Entgegenhaltungen:
- WO-A1-02/084156
- DE-U1- 29 511 223
- US-A1- 2013 154 841

## Beschreibung

Die Erfindung betrifft ein Ventilüberwachungssystem für ein koaxiales Doppelsicherheitsventil einer Gasventileinheit, die eine im Zuge einer Wärmeanforderung auftretende Gasanforderung eines Gasbrenners regelt. Anstelle von Ventilüberwachungssystem wird in der Technik auch die Diktion "Ventilprüfsystem (VPS)" verwandt. Ferner betrifft die Erfindung Verfahren zum Überwachen des koaxialen Doppelsicherheitsventils.

Aus dem Stand der Technik sind Ventilüberwachungssysteme zur Dichtheitskontrolle herkömmlicher Gasventile bzw. Gasventileinheiten mit zwei in Reihe angeordneten Sicherheits-Steuerventilen und einem Gasdruckwächter bekannt, wobei eine derartige Kontrolle beispielsweise gemäß der Norm EN1643 erfolgt. Die Dichtheitskontrolle von Gasventilen mit zwei in Reihe angeordneten Sicherheits-Steuerventilen erfordert die unabhängige Ansteuerung der einzelnen Sicherheits-Steuerventile sowie deren unabhängiges Öffnungs- und Schließverhalten. Ein derartiges Verfahren ist auf ein koaxiales Doppelsicherheitsventil nicht unmittelbar anwendbar, da die beiden Sicherheits-Steuerventile des Doppelsicherheitsventils nur bedingt unabhängig voneinander geöffnet werden können. Druckschriftlicher Stand der Technik im vorliegenden technischen Gebiet ist aus den Dokumenten WO 02/084156 A1, US 2013/154841 A1 und DE 295 11 223 U1 bekannt.

Der Erfindung liegt deshalb die Aufgabe zugrunde, ein Verfahren zur Überwachung für ein koaxiales Doppelsicherheitsventil bereitzustellen, mit denen die Dichtheit der beiden Steuerventile des Doppelsicherheitsventils überprüfbar ist, so dass das Doppelsicherheitsventil auch bei einem Einsatz mit VPS-Anforderung verwendbar ist. Diese Aufgaben werden durch die Merkmalskombination gemäß Patentanspruch 1 und 2 gelöst.

Es wird ein Ventilüberwachungssystem für ein koaxiales Doppelsicherheitsventil einer Gasventileinheit vorgeschlagen, die eine im Zuge einer Wärmeanforderung auftretende Gasanforderung eines Gasbrenners regelt und die zumindest das koaxiale Doppelsicherheitsventil und ein zur Regelung der Gasmenge in Reihe dazu nachgeschaltet strömungsverbunden angeordnetes Regelventil aufweist. Derartige Gasbrenner kommen beispielsweise bei Gasthermen zum Einsatz. Eine Wärmeanforderung liegt z.B. bei einem Warmwasserbedarf vor, der die Gastherme startet und mithin den Brenner zündet. Das Regelventil unterscheidet sich von den beiden Steuerventilen dadurch, dass es vorzugsweise mittels eines Schrittmotors in beliebige Öffnungsstellungen regelbar ist und die Gasdurchflussmenge durch die Gasventileinheit regelt.

Das Doppelsicherheitsventil weist ein erstes integrales Steuerventil und ein zum dem ersten Steuerventil koaxial und strömungstechnisch nachgeschaltet angeordnetes zweites integrales Steuerventil auf, die jeweils ausschließlich zwischen einer Öffnungsstellung und einer Schließstellung steuerbar sind (AUF-/ZU-Steuerventile). Die Steuerventile sind jeweils als Sicherheitsventile zur sicheren Unterbrechung des Gasflusses ausgebildet. Auf das erste Steuerventil wirkt eingangsseitig der Gaseingangsdruck, insbesondere unmittelbar aus der Gasleitung.

In einem zwischen dem ersten und dem zweiten Steuerventil ausgebildeten Strömungsmittelraum ist ein Drucksensor oder Druckschalter angeordnet, mit dem ein Schaltdruck des im Strömungsmittelraum zwischen dem ersten und zweiten Steuerventil eingeschlossenen Gases gemessen wird.

Durch eine Überprüfung des gemessenen Schaltdrucks über ein vorbestimmtes Zeitintervall erfolgt nacheinander eine Dichtheitsprüfung zunächst des zweiten Steuerventils und anschließend des ersten Steuerventils jeweils in Abhängigkeit von einer Öffnungsstellung oder Schließstellung des Regelventils und der Öffnungsstellung oder Schließstellung des ersten und zweiten Steuerventils. Mit dem erfindungsgemäßen Ventilüberwachungssystem können die Vorteile eines kostengünstigeren koaxialen Doppelsicherheitsventils mit geringerer Teilezahl, kompakterem Aufbau sowie geringerer elektrischer Leistung um die Funktion der Ventilüberwachung erweitert werden, so dass die Ventileinheiten mit koaxialem Doppelsicherheitsventil auch bei Anwendungen mit VPS-Anforderung eingesetzt werden können.

Jedes der Steuerventile und das Regelventil sind ausgebildet, das die Gasventileinheit durchströmende Gas abzusperren. Somit kann auch in Strömungsrichtung zwischen den einzelnen Ventilen Gas und mithin ein bestimmter Gasdruck eingesperrt und über den Drucksensor gemessen werden. Zudem wirkt auf das erste Steuerventil stets der Gaseingangsdruck. Soweit der gemessene Druck nicht unter einen Druckschwellwert sinkt bzw. über einen Druckschwellwert steigt, ist das an den Drucksensor angrenzende und zu überprüfende Ventil dicht.

In einer Ausführungsvariante des Ventilüberwachungssystems ist vorgesehen, dass die Dichtheitsprüfung des ersten und des zweiten Steuerventils nach einer Erledigung der Gasanforderung an die Gasventileinheit, d.h. nach einer Wärmeanforderung erfolgt.

Die Erledigung einer Wärmeanforderung umfasst dabei, dass zunächst das Gebläse zur Zuführung des Gas-Luft-Gemisches an den Brenner gestartet wird und noch ohne Gaszuführung das System mit Luft spült. Anschließend öffnen beide Steuerventile des koaxialen Doppelsicherheitsventils in die Öffnungsstellung für ein vorbestimmtes Zeitintervall, beispielsweise 1 Sekunde, während das Regelventil noch geschlossen ist. Das Regelventil wird dann in eine Start-Öffnungsstellung (Teilöffnungsstellung) gebracht und die Zündsequenz des Gasbrenners gestartet. Mit dem Auslösen des Zündfunkens werden die beiden Steuerventile des Doppelsicherheitsventils in die Öffnungsstellung gebracht und der Gasbrenner zündet. Sobald die Wärmeanforderung erledigt ist schließen zunächst die beiden Steuerventile des Doppelsicherheitsventils vollständig, anschließend auch das Regelventil. Das Gebläse vollzieht einen Nachspülvorgang und wird dann abgeschaltet.

Bei dem Ventilüberwachungssystem erfolgt die Dichtheitsprüfung des ersten Steuerventils nach der Dichtheitsprüfung des zweiten Steuerventils. Das zweite Steuerventil wird auf Dichtheit geprüft, indem der Schaltdruck zwischen den in der Schließstellung befindlichen ersten und zweiten Steuerventilen gemessen wird, nachdem das Regelventil in die Start-Öffnungsstellung gebracht wurde. Ausgangsseitig, d.h. einer dem Regelventil zuweisenden Seite, wirkt auf das zweite Steuerventil in dieser Situation Umgebungsdruck, der geringer ist als der zwischen den beiden Steuerventilen eingeschlossene Gaseingangsdruck. Sinkt der gemessene Schaltdruck nicht unter den vordefinierten Druckschwellwert, ist das zweite Steuerventil dicht. Das erste Steuerventil wird auf Dichtheit geprüft, indem der Schaltdruck zwischen den in der Schließstellung befindlichen ersten und zweiten Steuerventilen gemessen wird, nachdem nach Erledigung der Wärmeanforderung zunächst das erste Steuerventil, anschließend das zweite Steuerventil und letztlich das Regelventil geschlossen wurden. Der Gasdruck im Strömungsmittelraum konnte mithin durch das Regelventil noch entweichen, bevor das zweite Steuerventil in die Schließstellung gebracht wird. Da der Gaseingangsdruck weiterhin eingangsseitig auf das erste Steuerventil wirkt, darf der Druck im Strömungsmittelraum nicht über den vordefinierten Druckschwellwert ansteigen. Dann ist das erste Steuerventil dicht. Das Regelventil wird somit erfindungsgemäß für die Dichtheitsprüfung durch das Ventilüberwachungssystem mit genutzt.

Es wird ferner vorgesehen, dass das erste Steuerventil unmittelbar vor dem zweiten Steuerventil mit einem Zeitunterschied Δt in die Schließstellung gebracht wird, wobei der Zeitunterschied Δt vorzugsweise 10-20ms beträgt.

In einer alternativen Ausführung ist das Ventilüberwachungssystem dadurch gekennzeichnet, dass die Dichtheitsprüfung des ersten Steuerventils nach einer Erledigung der Gasanforderung an die Gasventileinheit und die Dichtheitsprüfung des zweiten Steuerventils während der Gasanforderung an die Gasventileinheit erfolgt. Die Dichtheitsprüfung des ersten Steuerventils erfolgt somit auch bei dieser Variante nach der Dichtheitsprüfung des zweiten Steuerventils.

Das zweite Steuerventil wird auf Dichtheit geprüft, indem der Schaltdruck zwischen den in der Schließstellung befindlichen ersten und zweiten Steuerventilen gemessen wird. Hierfür wird zunächst das Regelventil am Ende der Erledigung der Wärmeanforderung und gezündetem Gasbrenner in eine Teillaststellung, d.h. Teilöffnungsstellung, und anschließend unmittelbar und schnell in die Schließstellung gebracht. Nachfolgend werden die beiden Steuerventile des Doppelsicherheitsventils in die Schließstellung gebracht, wobei das erste Steuerventil unmittelbar vor dem zweiten Steuerventil geschlossen wird. Das Regelventil wird dann wieder geöffnet, so dass ausgangsseitig, d.h. einer dem Regelventil zuweisenden Seite, auf das zweite Steuerventil in dieser Situation der Umgebungsdruck wirkt, der geringer ist als der zwischen den beiden Steuerventilen eingeschlossene Gaseingangsdruck. Sinkt der gemessene Schaltdruck nicht unter den vordefinierten Druckschwellwert, ist das zweite Steuerventil dicht. Anschließend wird das erste Steuerventil auf Dichtheit geprüft. Hierfür wird das zweite Steuerventil kurz zur Entlüftung des Strömungsmittelraums geöffnet und wieder geschlossen. Im Strömungsmittelraum herrscht somit ebenfalls Umgebungsdruck. Daran nachfolgend wird der Schaltdruck zwischen den in der Schließstellung befindlichen ersten und zweiten Steuerventilen gemessen. Da der Gaseingangsdruck weiterhin eingangsseitig auf das erste Steuerventil wirkt, darf der Druck im Strömungsmittelraum nicht über den Druckschwellwert ansteigen. Dann ist das erste Steuerventil dicht. Auch bei dieser Ausführungsvariante wird das Regelventil für die Dichtheitsprüfung durch das Ventilüberwachungssystem mit genutzt.

Es stehen somit zwei alternative Varianten zur Überprüfung des koaxialen Doppelsicherheitsventils zur Verfügung.

Die Erfindung betrifft das Verfahren zur Überwachung des koaxialen Doppelsicherheitsventils des vorstehenden Ventilüberwachungssystems gemäß der ersten Ausführungsvariante, wobei das Verfahren bei der Gasanforderung im Zuge der Wärmeanforderung die nachfolgenden Schritte durchläuft.

Zunächst werden das erste und das zweite Steuerventil für ein vorbestimmtes Zeitintervall, insbesondere 1 Sekunde, in die Öffnungsstellung und unmittelbar anschließend in die Schließstellung gebracht. Anschließend wird das Regelventil in die Öffnungsstellung versetzt.

Der Schaltdruck im Strömungsmittelraum wird gemessen bzw. geprüft und zur Dichtheitsprüfung des zweiten Steuerventils mit einem vordefinierten Druckschwellwert verglichen. Der Druckschwellwert kann beispielsweise bestimmt werden als Differenz aus der Hälfte des Gasnenndrucks und dem Schalt-Hysterese-Druck (Pschalt=1/2 Pnenn - Pschalt-hysterese) des Steuerventils. Der Druckschwellwert darf nicht unterschritten werden, dann ist das zweite Steuerventil dicht.

Anschließend werden das erste und das zweite Steuerventil des Doppelsicherheitsventils in die Öffnungsstellung gebracht, so dass der Gasweg durch die Ventileinheit zum Gasbrenner freigegeben ist und die Wärmeanforderung erledigt werden kann.

Nach Erledigung der Gasanforderung bzw. Wärmeanforderung werden das erste und das zweite Steuerventil in die Schließstellung gebracht, wobei immer das erste Steuerventil zeitlich unmittelbar vor dem zweiten Steuerventil schließt. Anschließend wird auch das Regelventil geschlossen. Dann wird der Schaltdruck im Strömungsmittelraum geprüft und zur Dichtheitsprüfung des ersten Steuerventils mit einem vordefinierten Druckschwellwert verglichen. Dieser Druckschwellwert kann beispielsweise bestimmt werden als die Hälfte des Gasnenndrucks (Pschalt=1/2 Pnenn) und darf nicht überschritten werden, dann ist das erste Steuerventil dicht.

Bezüglich der zweiten Ausführungsvariante des Ventilüberwachungssystems wird ebenfalls ein erfindungsgemäßes Verfahren zur Überwachung des koaxialen Doppelsicherheitsventils vorgeschlagen. Das Verfahren erfolgt nach der Erledigung der Gasanforderung im Zuge der Wärmeanforderung an die Gasventileinheit und durchläuft die nachfolgenden Schritte.

Das Regelventil wird zunächst bei geöffnetem Doppelsicherheitsventil in eine Teilöffnungsstellung (Teillastbetrieb) versetzt und anschließend unmittelbar und direkt in die Schließstellung gebracht. Der Versatz von der Teilöffnungsstellung in die Schließstellung erfolgt vorzugsweise mittels eines Schrittmotors, vorzugsweise innerhalb von maximal 0,5 Sekunden. Es sperrt den bis dahin zur Erledigung der Gasanforderung in der Gasventileinheit offenen Gasweg ab. Anschließend werden das erste und das zweite Steuerventil nacheinander in die Schließstellung gebracht, wobei stets das erste Steuerventil vor dem zweiten Steuerventil geschlossen wird. Das Regelventil wird dann zurück in die Öffnungsstellung versetzt. Anschließend wird der Schaltdruck im Strömungsmittelraum geprüft und zur Dichtheitsprüfung des zweiten Steuerventils mit einem Druckschwellwert verglichen. Der Druckschwellwert kann beispielsweise bestimmt werden als Differenz aus der Hälfte des Gasnenndrucks und dem Schalt-Hysterese-Druck (Pschalt=1/2 Pnenn - Pschalt-hysterese). Der Druckschwellwert darf nicht unterschritten werden, dann ist das zweite Steuerventil dicht.

Dann wird das zweite Steuerventil zur zumindest teilweisen Entlüftung in die Öffnungsstellung gebracht, während das erste Steuerventil in der Schließstellung verbleibt. Der Schaltdruck im Strömungsmittelraum wird geprüft und zur Dichtheitsprüfung des ersten Steuerventils mit einem Druckschwellwert verglichen. Dieser Druckschwellwert kann beispielsweise bestimmt werden als die Hälfte des Gasnenndrucks (Pschalt=1/2 Pnenn) und darf nicht überschritten werden, dann ist das erste Steuerventil dicht.

Bei dem Verfahren ist vorteilhaft, wenn das zweite Steuerventil nach der zumindest teilweisen Entlüftung unmittelbar anschließend in die Schließstellung gebracht wird, bevor der Schaltdruck im Strömungsmittelraum geprüft wird.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figur näher dargestellt. Es zeigt:

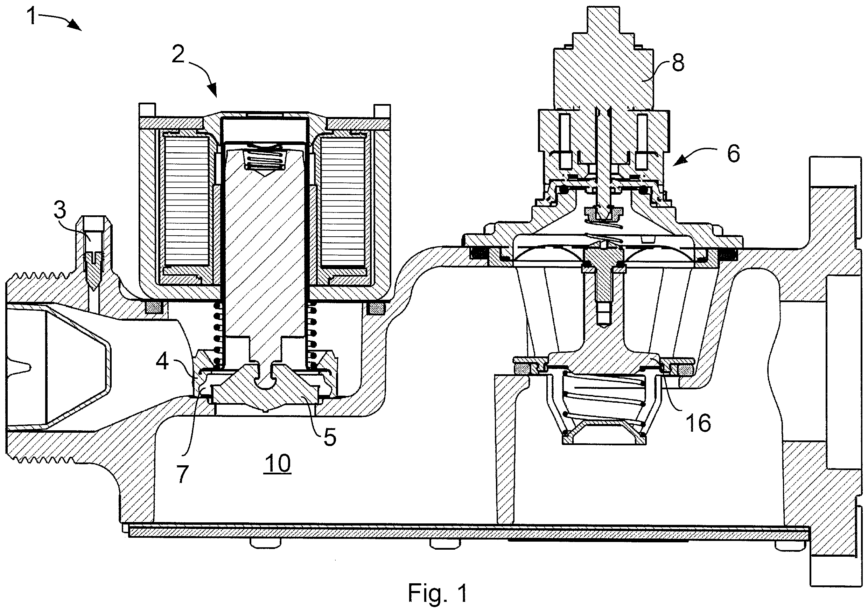

- Fig. 1: eine schematische Schnittansicht einer Gasventileinheit mit Ventilüberwachungssystem.

In Figur 1 ist eine schematische Ansicht eines Ventilüberwachungssystems für ein koaxiales Doppelsicherheitsventil 2 einer Gasventileinheit 1 dargestellt. Die Gasventileinheit 1 umfasst einen Gaseingang 3, der mit der Gasleitung (nicht dargestellt) verbunden wird. In Strömungsrichtung folgen das erste Steuerventil 4 und das zweite Steuerventil 5 des koaxialen Doppelsicherheitsventils 2 sowie anschließend das Regelventil 6 mit Ventilkörper 16. Das erste und das zweite Steuerventil 4, 5 weisen jeweils einen Ventilkörper sowie einen Ventilsitz auf und bilden zwischen sich den Strömungsmittelraum 7 in dem der den Schaltdruck messende Drucksensor angeordnet ist. Das Regelventil 6 umfasst ebenfalls einen Ventilkörper und einen Ventilsitz, wobei die Öffnungsstellung des Ventilkörpers über den Schrittmotor 8 geregelt wird. In Strömungsrichtung dem Regelventil 6 nachfolgend ist die Mischeinheit zur Bereitstellung des Gas/Luft-Gemisches zum Brenner (nicht dargestellt). Im Bereich des Gaseingangs 3 herrscht der Gaseingangsdruck (Gasnenndruck) der Gasleitung. Bei geschlossenem Doppelsicherheitsventil 2 und geöffnetem Regelventil 6 herrscht im Bereich des Regelventils 6 und mithin ausgangsseitig am zweiten Steuerventil 5 Umgebungsdruck.

Bei dem Ventilüberwachungssystem erfolgt eine Dichtheitsprüfung des ersten Steuerventils 4 und des zweiten Steuerventils 5 unter Nutzung des Regelventils 6 und des stets eingangsseitig anliegenden Gaseingangsdrucks.

Dabei kann die Ventileinheit 1 die zwei Varianten der Dichtheitsprüfung und mithin der Ventilüberwachung des Doppelsicherheitsventils 2 gewährleisten.

In der ersten Variante werden das erste und zweite Steuerventil 4, 5 bei einer Gasanforderung im Zuge einer Wärmeanforderung kurz geöffnet und anschließend wieder geschlossen, wobei das erste Steuerventil 4 mit einem Zeitunterschied Δt=10-20ms vor dem zweiten Steuerventil 5 in die Schließstellung gebracht wird. Das Regelventil 6 ist dabei zunächst noch geschlossen, so dass der Gaseingangsdruck gegen das Regelventil 6 wirkt, solange das Doppelsicherheitsventil 2 geöffnet wird. Das Regelventil 6 wird nach dem Schließen der ersten und zweiten Steuerventile 4, 5 in die Start-Teilöffnungsstellung gebracht. Das zweite Steuerventil 5 wird auf Dichtheit geprüft, indem der Schaltdruck im Strömungsmittelraum 7 zwischen den in der Schließstellung befindlichen ersten und zweiten Steuerventilen 4, 5 für vorzugsweise 0,4 Sekunden gemessen wird. Durch das Öffnen des Regelventils 6 sinkt der Gasdruck ausgangsseitig, d.h. der dem Regelventil 6 zuweisenden Seite 10 auf Umgebungsdruck, der geringer ist als der zwischen den beiden Steuerventilen 4, 5 im Strömungsmittelraum 7 eingeschlossene Gasdruck. Sinkt der gemessene Schaltdruck nicht unter den vordefinierten Druckschwellwert, ist das zweite Steuerventil dicht. Anschließend wird die Wärmeanforderung erledigt, indem das Doppelsicherheitsventil öffnet und der Gasbrenner zündet. Nach Erledigung der Wärmeanforderung schließen das erste und zweite Steuerventil 4, 5 sowie anschließend das Regelventil 6, so dass der Gasdruck im Strömungsmittelraum 7 durch das Regelventil 6 entweichen kann, bevor das zweite Steuerventil 5 in die Schließstellung gebracht wird. Es folgt die Prüfung des ersten Steuerventils 4 auf Dichtheit während ausschließlich der Gaseingangsdruck eingangsseitig auf das erste Steuerventil 4 wirkt. Der Schaltdruck im Strömungsraum 7 zwischen den in der Schließstellung befindlichen ersten und zweiten Steuerventilen 4, 5 wird für vorzugsweise 0,2 Sekunden gemessen und darf den Druckschwellwert nicht überschreiten. Dann ist das erste Steuerventil 4 dicht.

Alternativ wird die Ventileinheit 1 für das Ventilüberwachungssystem nach vollständiger Erledigung einer Wärmeanforderung genutzt. In dieser zweiten Variante wird das Regelventil 6 zunächst bei vollständig geöffnetem Doppelsicherheitsventil 2 in eine Teilöffnungsstellung (Teillastbetrieb) versetzt und anschließend unmittelbar und direkt, vorzugsweise bei einer Frequenz von 400Hz in 0,5 Sekunden durch den Schrittmotors 8 in die Schließstellung gebracht. Das Regelventil 6 sperrt den bis dahin zur Erledigung der Gasanforderung in der Gasventileinheit 1 offenen Gasweg ab. Anschließend werden zunächst das erste Steuerventil 4 und dann das zweite Steuerventil 5 nacheinander in die Schließstellung gebracht. Das Regelventil 6 wird dann wieder geöffnet, so dass der Druck auf der dem Regelventil 6 zuweisenden Seite 10 des zweiten Steuerventils 5 auf Umgebungsdruck sinkt. Anschließend wird zur Dichtheitsprüfung des zweiten Steuerventils 5 der Schaltdruck im Strömungsmittelraum 7 über den Drucksensor 7 für vorzugsweise 0,4 Sekunden gemessen und mit dem vordefinierten Druckschwellwert (z.B. (Pschalt=1/2 Pnenn - Pschalt-hysterese) verglichen. Soweit der Druckschwellwert nicht unterschritten wird, ist das zweite Steuerventil 5 dicht. Im Anschluss wird das zweite Steuerventil 5 kurzzeitig zur Entlüftung in die Öffnungsstellung gebracht, während das erste Steuerventil 4 in der Schließstellung verbleibt. Der Schaltdruck im Strömungsmittelraum 7 sinkt dadurch auf Umgebungsdruck. Da eingangsseitig auf das erste Steuerventil 4 weiterhin der Gaseingangsdruck wirkt, darf der für vorzugsweise 0,2 Sekunden gemessene Steuerdruck nicht über einen vordefinierten Druckschwellwert (z.B. Pschalt=1/2 Pnenn) ansteigen. Dann ist das erste Steuerventil 4 dicht und die Dichtheitsprüfung erfolgreich abgeschlossen.

## Patentansprüche

1. Verfahren zur Überwachung eines koaxialen Doppelsicherheitsventils einer Gasventileinheit (1) eines Ventilüberwachungssystems, wobei die Gasventileinheit eine im Zuge einer Wärmeanforderung auftretende Gasanforderung eines Gasbrenners regelt und die Gasventileinheit zumindest das koaxiale Doppelsicherheitsventil (2) und ein zur Regelung der Gasmenge in Reihe dazu nachgeschaltet strömungsverbunden angeordnetes Regelventil (6) aufweist,
wobei das Doppelsicherheitsventil (2) ein erstes integrales Steuerventil (4) und ein zum dem ersten Steuerventil (4) koaxial und strömungstechnisch nachgeschaltet angeordnetes zweites integrales Steuerventil (5) aufweist, die jeweils ausschließlich zwischen einer Öffnungsstellung und einer Schließstellung steuerbar sind,
wobei auf das erste Steuerventil (4) eingangsseitig ein Gaseingangsdruck wirkt,
wobei in einem zwischen dem ersten und dem zweiten Steuerventil (4, 5) ausgebildeten Strömungsmittelraum (7) ein einen Schaltdruck messender Drucksensor oder Druckschalter angeordnet ist, und
wobei durch eine Überprüfung des Schaltdrucks nacheinander eine Dichtheitsprüfung des zweiten Steuerventils (5) und des ersten Steuerventils (4) jeweils in Abhängigkeit von einer Öffnungsstellung oder Schließstellung des Regelventils (6) und der Öffnungsstellung oder Schließstellung des ersten und zweiten Steuerventils (4, 5) erfolgt, **dadurch gekennzeichnet, dass** das Verfahren bei der Gasanforderung im Zuge der Wärmeanforderung die Schritte durchläuft:
a) das erste und das zweite Steuerventil (4, 5) werden für ein vorbestimmtes Zeitintervall in die Öffnungsstellung und unmittelbar anschließend in die Schließstellung gebracht,
b) das Regelventil (6) wird in die Öffnungsstellung gebracht,
c) der Schaltdruck im Strömungsmittelraum (7) wird geprüft und zur Dichtheitsprüfung des zweiten Steuerventils (5) mit einem Druckschwellwert verglichen,
d) das erste und das zweite Steuerventil (4, 5) werden in die Öffnungsstellung gebracht,
e) nach Erledigung der Gasanforderung werden das erste und das zweite Steuerventil (4, 5) in die Schließstellung gebracht, anschließend wird das Regelventil (6) in die Schließstellung gebracht,
f) der Schaltdruck im Strömungsmittelraum (7) wird geprüft und zur Dichtheitsprüfung des ersten Steuerventils (4) mit einem Druckschwellwert verglichen.

2. Verfahren zur Überwachung eines koaxialen Doppelsicherheitsventils (2) einer Gasventileinheit (1) eines Ventilüberwachungssystems, wobei die Gasventileinheit eine im Zuge einer Wärmeanforderung auftretende Gasanforderung eines Gasbrenners regelt und die Gasventileinheit zumindest das koaxiale Doppelsicherheitsventil (2) und ein zur Regelung der Gasmenge in Reihe dazu nachgeschaltet strömungsverbunden angeordnetes Regelventil (6) aufweist,
wobei das Doppelsicherheitsventil (2) ein erstes integrales Steuerventil (4) und ein zum dem ersten Steuerventil (4) koaxial und strömungstechnisch nachgeschaltet angeordnetes zweites integrales Steuerventil (5) aufweist, die jeweils ausschließlich zwischen einer Öffnungsstellung und einer Schließstellung steuerbar sind,
wobei auf das erste Steuerventil (4) eingangsseitig ein Gaseingangsdruck wirkt,
wobei in einem zwischen dem ersten und dem zweiten Steuerventil (4, 5) ausgebildeten Strömungsmittelraum (7) ein einen Schaltdruck messender Drucksensor oder Druckschalter angeordnet ist, und
wobei durch eine Überprüfung des Schaltdrucks nacheinander eine Dichtheitsprüfung des zweiten Steuerventils (5) und des ersten Steuerventils (4) jeweils in Abhängigkeit von einer Öffnungsstellung oder Schließstellung des Regelventils (6) und der Öffnungsstellung oder Schließstellung des ersten und zweiten Steuerventils (4, 5) erfolgt, **dadurch gekennzeichnet, dass** das Verfahren nach der Erledigung der Gasanforderung im Zuge der Wärmeanforderung an die Gasventileinheit (1) die Schritte durchläuft:
i. das Regelventil (6) wird in die Schließstellung gebracht und sperrt den bis dahin in der Gasventileinheit (1) offenen Gasweg ab,
ii. das erste und das zweite Steuerventil (4, 5) werden in die Schließstellung gebracht,
iii. das Regelventil (6) wird zurück in die Öffnungsstellung gebracht,
iv. der Schaltdruck im Strömungsmittelraum (7) wird geprüft und zur Dichtheitsprüfung des zweiten Steuerventils (5) mit einem Druckschwellwert verglichen,
v. das zweite Steuerventil (5) wird zur zumindest teilweisen Entlüftung in die Öffnungsstellung gebracht, während das erste Steuerventil (4) in der Schließstellung verbleibt,
vi: der Schaltdruck im Strömungsmittelraum (7) wird geprüft und zur Dichtheitsprüfung des ersten Steuerventils (4) mit einem Druckschwellwert verglichen.

3. Verfahren nach Anspruch 2, **dadurch gekennzeichnet, dass** gemäß Schritt e) das zweite Steuerventil (5) nach der zumindest teilweisen Entlüftung unmittelbar anschließend in die Schließstellung gebracht wird, bevor der Schaltdruck im Strömungsmittelraum (7) geprüft wird.

4. Verfahren nach Anspruch 2, **dadurch gekennzeichnet, dass** das erste und das zweite Steuerventil (5) nacheinander in die Schließstellung gebracht werden, wobei das erste Steuerventil (4) unmittelbar vor dem zweiten Steuerventil (5) geschlossen wird.

5. Verfahren nach Anspruch einem der Ansprüche 2 -4, **dadurch gekennzeichnet, dass** in Schritt i) das Regelventil (6) aus einer Teilöffnungsstellung unmittelbar und direkt in die Schließstellung gebracht wird.

6. Verfahren nach Anspruch 1 oder 2, **dadurch gekennzeichnet, dass** die Dichtheitsprüfung des ersten und des zweiten Steuerventils (4, 5) nach einer Erledigung der Gasanforderung an die Gasventileinheit (1) erfolgt.

7. Verfahren nach Anspruch 1 oder 2, **dadurch gekennzeichnet, dass** die Dichtheitsprüfung des ersten Steuerventils (4) nach einer Erledigung der Gasanforderung an die Gasventileinheit (1) und die Dichtheitsprüfung des zweiten Steuerventils (5) während der Gasanforderung an die Gasventileinheit (1) erfolgt.

8. Verfahren nach einem der Ansprüche 1, 2, 6 oder 7, **dadurch gekennzeichnet, dass** die Dichtheitsprüfung des ersten Steuerventils (4) nach der Dichtheitsprüfung des zweiten Steuerventils (5) erfolgt

9. Verfahren nach einem der Ansprüche 1, 2, 6, 7 oder 8, **dadurch gekennzeichnet, dass** bei der Dichtheitsprüfung des zweiten Steuerventils (5) das Regelventil (6) in der Öffnungsstellung ist und dabei auf das zweite Steuerventil (5) ausgangsseitig ein Umgebungsdruck wirkt.

10. Verfahren nach einem der Ansprüche 1, 2, 6, 7, 8 oder 9, **dadurch gekennzeichnet, dass** das erste Steuerventil (4) unmittelbar vor dem zweiten Steuerventil (5) mit einem Zeitunterschied (Δt) in die Schließstellung gebracht wird.

11. Verfahren nach Anspruch 10, **dadurch gekennzeichnet, dass** der Zeitunterschied 10-20ms beträgt.

## Claims

1. A method for monitoring a coaxial double safety valve of a gas valve unit (1) of a valve monitoring system, wherein the gas valve unit regulates a gas request of a gas burner occurring in the course of a heat request, and the gas valve unit has at least the coaxial double safety valve (2) and a control valve which is fluidly connected downstream therefrom in series in order to regulate the amount of gas (6),
wherein the double safety valve (2) has a first integral control valve (4) and a second integral control valve (5) that is arranged coaxially and fluidically downstream from the first control valve (4), each of which can be controlled exclusively between an open position and a closed position,
wherein a gas inlet pressure acts on the inlet side of the first control valve (4), wherein a pressure sensor or pressure switch measuring a switching pressure is arranged in a flow space (7) that is formed between the first and the second control valve (4, 5), and
wherein, by successively checking the switching pressure, a tightness test of the second control valve (5) and of the first control valve (4) is respectively performed in dependence on an open position or closed position of the control valve (6) and the open position or closed position of the first and the second control valve (4, 5), **characterized in that** the method passes through the following steps during the gas request in the course of the heat request:
a) the first and the second control valve (4, 5) are brought into the open position for a predetermined time interval and, immediately thereafter, into the closed position,
b) the control valve (6) is brought into the open position,
c) the switching pressure in the fluid space (7) is checked and compared with a pressure threshold value in order to test the second control valve (5) for tightness,
d) the first and the second control valve (4, 5) are brought into the open position,
e) upon fulfillment of the gas request, the first and the second control valve (4, 5) are brought into the closed position, and then the control valve (6) is brought into the closed position,
f) the switching pressure in the fluid space (7) is checked and compared with a pressure threshold value in order to test the first control valve (4) for tightness.

2. A method for monitoring a coaxial double safety valve (2) of a gas valve unit (1) of a valve monitoring system, wherein the gas valve unit regulates a gas request of a gas burner occurring in the course of a heat request, and the gas valve unit has at least the coaxial double safety valve (2) and a control valve which is fluidly connected downstream therefrom in series in order to regulate the amount of gas (6),
wherein the double safety valve (2) has a first integral control valve (4) and a second integral control valve (5) that is arranged coaxially and fluidically downstream from the first control valve (4), each of which can be controlled exclusively between an open position and a closed position,
wherein a gas inlet pressure acts on the inlet side of the first control valve (4), wherein a pressure sensor or pressure switch measuring a switching pressure is arranged in a flow space (7) that is formed between the first and the second control valve (4, 5), and
wherein, by successively checking the switching pressure, a tightness test of the second control valve (5) and of the first control valve (4) is respectively performed in dependence on an open position or closed position of the control valve (6) and the open position or closed position of the first and the second control valve (4, 5), **characterized in that** the method passes through the following steps upon fulfillment of the gas request in the course of the heat request to the gas valve unit (1):
i. the control valve (6) is brought into the closed position and blocks the gas path that has been open in the gas valve unit (1),
ii. the first and the second control valve (4, 5) are brought into the closed position,
iii. the control valve (6) is brought back into the open position,
iv. the switching pressure in the fluid space (7) is checked and compared with a pressure threshold value in order to test the second control valve (5) for tightness,
v. the second control valve (5) is brought into the open position for at least partial venting, while the first control valve (4) remains in the closed position,
vi: the switching pressure in the fluid space (7) is checked and compared with a pressure threshold value in order to test the first control valve (4) for tightness.

3. The method as set forth in claim 2, **characterized in that**, according to step e), the second control valve (5) is brought into the closed position immediately after the at least partial venting before the switching pressure in the fluid chamber (7) is checked.

4. The method as set forth in claim 2, **characterized in that** the first and the second control valve (5) are brought successively into the closed position, the first control valve (4) being closed immediately before the second control valve (5).

5. The method as set forth in one of claims 2 to 4, **characterized in that**, in step i), the control valve (6) is brought from a partially open position immediately and directly into the closed position.

6. The method as set forth in claim 1 or 2, **characterized in that** the tightness test of the first and the second control valve (4, 5) takes place after the gas request to the gas valve unit (1) has been fulfilled.

7. The method as set forth in claim 1 or 2, **characterized in that** the tightness test of the first control valve (4) takes place after the gas request to the gas valve unit (1) has been fulfilled, and the tightness test of the second control valve (5) takes place during the gas request to the gas valve unit (1).

8. The method as set forth in one of claims 1, 2, 6, or 7, **characterized in that** the tightness test of the first control valve (4) takes place after the tightness test of the second control valve (5).

9. The method as set forth in one of claims 1, 2, 6, 7, or 8, **characterized in that** the control valve (6) is in the open position during the tightness test of the second control valve (5), and an ambient pressure acts on the output side of the second control valve (5).

10. The method as set forth in one of claims 1, 2, 6, 7, 8, or 9, **characterized in that** the first control valve (4) is brought into the closed position immediately before the second control valve (5) with a time difference (Δt).

11. The method as set forth in claim 10, **characterized in that** the time difference is 10-20 ms.

## Revendications

1. Procédé de surveillance d'une vanne de sécurité double coaxiale d'une unité de vanne à gaz (1) d'un système de surveillance de vanne, l'unité de vanne à gaz régulant une demande de gaz d'un brûleur à gaz survenant dans le cadre d'une demande de chaleur, et l'unité de vanne à gaz présentant au moins la vanne de sécurité double coaxiale (2) et une vanne de régulation (6) disposée en communication fluidique et placée en aval en série avec celle-ci pour réguler la quantité de gaz,
la vanne de sécurité double (2) présentant une première vanne de commande intégrale (4) et une deuxième vanne de commande intégrale (5) disposée de manière coaxiale à la première vanne de commande (4) et placée en aval en communication fluidique, qui peuvent être commandées respectivement uniquement entre une position d'ouverture et une position de fermeture,
une pression d'entrée de gaz agissant sur la première vanne de commande (4) côté entrée,
un capteur de pression ou un commutateur de pression mesurant une pression de commutation étant disposé dans un espace d'écoulement de fluide (7) réalisé entre la première et la deuxième vanne de commande (4, 5), et
un contrôle de la pression de commutation permettant d'effectuer successivement un contrôle d'étanchéité de la deuxième vanne de commande (5) et de la première vanne de commande (4) respectivement en fonction d'une position d'ouverture ou d'une position de fermeture de la vanne de régulation (6) et en fonction de la position d'ouverture ou de la position de fermeture de la première et de la deuxième vanne de commande (4, 5),
**caractérisé en ce que** le procédé, lors de la demande de gaz dans le cadre de la demande de chaleur, exécute les étapes suivantes :
a) la première et la deuxième vanne de commande (4, 5) sont amenées pendant un intervalle de temps prédéterminé en position d'ouverture et immédiatement après en position de fermeture,
b) la vanne de régulation (6) est amenée en position d'ouverture,
c) la pression de commutation dans l'espace d'écoulement de fluide (7) est contrôlée et est comparée avec une valeur seuil de pression pour le contrôle d'étanchéité de la deuxième vanne de commande (5),
d) la première et la deuxième vanne de commande (4, 5) sont amenées en position d'ouverture,
e) après le traitement de la demande de gaz, la première et la deuxième vanne de commande (4, 5) sont amenées en position de fermeture, la vanne de régulation (6) étant ensuite amenée en position de fermeture,
f) la pression de commutation dans l'espace d'écoulement de fluide (7) est contrôlée et est comparée avec une valeur seuil de pression pour le contrôle d'étanchéité de la première vanne de commande (4).

2. Procédé de surveillance d'une vanne de sécurité double coaxiale (2) d'une unité de vanne à gaz (1) d'un système de surveillance de vanne, l'unité de vanne à gaz régulant une demande de gaz d'un brûleur à gaz survenant dans le cadre d'une demande de chaleur, et l'unité de vanne à gaz présentant au moins la vanne de sécurité double coaxiale (2) et une vanne de régulation (6) disposée en communication fluidique et placée en aval en série avec celle-ci pour réguler la quantité de gaz,
la vanne de sécurité double (2) présentant une première vanne de commande intégrale (4) et une deuxième vanne de commande intégrale (5) disposée de manière coaxiale à la première vanne de commande (4) et placée en aval en communication fluidique, qui peuvent être commandées respectivement uniquement entre une position d'ouverture et une position de fermeture,
une pression d'entrée de gaz agissant sur la vanne de commande (4) côté entrée,
un capteur de pression ou un commutateur de pression mesurant une pression de commutation étant disposé dans un espace d'écoulement de fluide (7) réalisé entre la première et la deuxième vanne de commande (4, 5), et
un contrôle de la pression de commutation permettant d'effectuer successivement un contrôle d'étanchéité de la deuxième vanne de commande (5) et de la première vanne de commande (4) respectivement en fonction d'une position d'ouverture ou d'une position de fermeture de la vanne de régulation (6) et en fonction de la position d'ouverture ou de la position de fermeture de la première et de la deuxième vanne de commande (4, 5),
**caractérisé en ce que** le procédé, après le traitement de la demande de gaz dans le cadre de la demande de chaleur destinée à l'unité de vanne à gaz (1), exécute les étapes :
i. la vanne de régulation (6) est amenée en position de fermeture et bloque le chemin de gaz jusque là ouvert dans l'unité de vanne à gaz (1),
ii. la première et la deuxième vanne de commande (4, 5) sont amenées en position de fermeture,
iii. la vanne de régulation (6) est ramenée en position d'ouverture,
iv. la pression de commutation dans l'espace d'écoulement de fluide (7) est contrôlée et est comparée avec une valeur seuil de pression pour le contrôle d'étanchéité de la deuxième vanne de commande (5),
v. la deuxième vanne de commande (5) est amenée en position d'ouverture pour une purge au moins partielle pendant que la première vanne de commande (4) reste en position de fermeture,
vi. la pression de commutation dans l'espace d'écoulement de fluide (7) est contrôlée et est comparée avec une valeur seuil de pression pour le contrôle d'étanchéité de la première vanne de commande (4).

3. Procédé selon la revendication 2, **caractérisé en ce que** selon l'étape e), la deuxième vanne de commande (5), après la purge au moins partielle, est amenée immédiatement après en position de fermeture avant que la pression de commutation dans l'espace d'écoulement de fluide (7) ne soit contrôlée.

4. Procédé selon la revendication 2, **caractérisé en ce que** la première et la deuxième vanne de commande (5) sont amenées successivement en position de fermeture, la première vanne de commande (4) étant fermée immédiatement avant la deuxième vanne de commande (5).

5. Procédé selon l'une quelconque des revendications 2 à 4, **caractérisé en ce qu'**à l'étape i), la vanne de régulation (6) est amenée d'une position d'ouverture partielle immédiatement et directement en position de fermeture.

6. Procédé selon la revendication 1 ou 2, **caractérisé en ce que** le contrôle d'étanchéité de la première et de la deuxième vanne de commande (4, 5) est effectué après un traitement de la demande de gaz destinée à l'unité de vanne à gaz (1).

7. Procédé selon la revendication 1 ou 2, **caractérisé en ce que** le contrôle d'étanchéité de la première vanne de commande (4) est effectué après un traitement de la demande de gaz destinée à l'unité de vanne à gaz (1), et le contrôle d'étanchéité de la deuxième vanne de commande (5) est effectué pendant la demande de gaz destinée à l'unité de vanne à gaz (1).

8. Procédé selon l'une quelconque des revendications 1, 2, 6 ou 7, **caractérisé en ce que** le contrôle d'étanchéité de la première vanne de commande (4) est effectué après le contrôle d'étanchéité de la deuxième vanne de commande (5).

9. Procédé selon l'une quelconque des revendications 1, 2, 6, 7 ou 8, **caractérisé en ce que** lors du contrôle d'étanchéité de la deuxième vanne de commande (5), la vanne de régulation (6) se trouve en position d'ouverture, et une pression ambiante agit alors sur la deuxième vanne de commande (5) côté sortie.

10. Procédé selon l'une quelconque des revendications 1, 2, 6, 7, 8 ou 9, **caractérisé en ce que** la première vanne de commande (4) est amenée en position de fermeture immédiatement avant la deuxième vanne de commande (5) avec un décalage dans le temps (Δt).

11. Procédé selon la revendication 10, **caractérisé en ce que** le décalage dans le temps est de 10 à 20 ms.
